# EUROPEAN PATENT SPECIFICATION

(11) **EP 3 606 888 B1**
(45) Date of publication and mention of the grant of the patent: **30.12.2020**
(21) Application number: 18729391.5
(22) Date of filing: 04.06.2018
(51) Int. Cl.: C05B 11/08, C05B 11/10, C05B 17/00, C05D 9/00

(54) **PROCESS FOR MAKING PHOSPHATE-CONTAINING FERTILISERS**
VERFAHREN ZUR HERSTELLUNG PHOSPHATHALTIGER DÜNGEMITTEL
PROCÉDÉ DE FABRICATION D'ENGRAIS PHOSPHATÉS

(30) Priority: 02.06.2017 EP 17174214
(43) Date of publication of application: 12.02.2020
(73) Proprietor: Power Minerals Limited, Sutton Coldfield Birmingham West Midlands B72 1QY (GB)
(72) Inventor: GAY, Michael Robert, Birmingham West Midlands B72 1QY (GB)
(74) Representative: Bajjon, Alexander
(86) International application number: PCT/EP2018/064588
(87) International publication number: WO 2018/220222

(56) References cited:
- EP-A1- 0 937 694
- EP-A1- 1 873 132
- EP-A2- 1 918 266
- WO-A1-2011/137880
- WO-A1-2017/093570
- WO-A1-2017/137538
- GB-A- 990 672
- GB-A- 1 031 352
- GB-A- 2 272 695

## Description

### Introduction

This present invention relates to the treatment of powders to produce granules which are useful as phosphate-containing fertilisers.

### Background to the Invention

Powders such as those produced from phosphate mining, other phosphate-containing powders, powders from the calcination of bone and offal to produce bone meal ash, incinerated sewage sludge ash, ashes from the combustion of poultry litter and ashes from the combustion of other biomasses are all examples of powders which have potentially useful levels of phosphate but issues associated with their format, e.g. consisting of or giving rise to significant volumes of dust, creating a nuisance, as well as being a potential health hazard (e.g. causing respiratory problems through the inhalation of fine particles) and a source of pollution.

Furthermore, their usage as an agricultural product, for example in land spreading, can be difficult, as they cannot be applied accurately, instead requiring specialist equipment to do so. This can be wasteful as well as raising the capital cost of their usage, the net result being lower values achieved by the product if used at all.

Many ashes and dusts are designated as waste, and have little or no further use; therefore it would be desirable to convert these powders into more industrially useful products.

Bone meal ash can be processed, though it is problematic to do so because it is often not possible to form a granule from the powder without using a binder. As an example, it is known to use a clay (e.g. bentonite) in amounts of approximately 40% by weight in combination with bone meal ash powder. This produces wet granules which require drying, a time consuming and expensive step, before they can be used for spreading. In addition, the nutrient value of these granules is decreased as the bentonite has no additional nutrient value.

It is also known to treat ash that has been contaminated, e.g. with chromium (at high oxidation states) from wood paint or wood worm treatment, in admixture with farm slurries, with acid at high concentration and then alkali at high concentration. This combination produces significantly exothermic reactions and powerful reducing and oxidising steps to detoxify the waste, reducing incidence of high oxidation state metals and destroying organic contaminants in the slurries. One such process is the subject of WO 2013/108041. This technology works well but requires concentrated acids and alkalis and is designed for contaminated feedstocks and otherwise toxic organic waste.

US 2007/0062232, EP 1873132 and EP 1918226 describe a method of producing fertilisers from incinerated ash of chicken litter droppings by adding an alkaline earth metal compound, followed by a mineral acid to the ash. These documents describe the formation of a powder suitable for use as a fertiliser which is then subsequently treated to form granules.

EP 0937694 describes a method of treating ash from the incineration of animal waste with a monoammonium and/or monoalkali-metal salt of orthophosphoric acid to reduce the alkalinity of the ash. The increased alkalinity of the ash is said to increase the potential nitrogen content of the ash

WO 2011/137880 describes an NPK fertiliser derived from ashes from the combustion of municipal sewage sludge.

GB2272695 describes particles formed from ash from burnt animal waste, which are said to be useful as fertilisers.

GB990672 and GB1031352 describe methods of pelletising finely divided solid materials or pulverised products.

Our earlier applications WO 2017/093570 and WO 2017/137538 disclose that certain ashes and mineral powders can be granulated by adding a mixture of a mineral acid and alkaline earth metal oxides, hydroxides and/or carbonates to give granules, without the need for any additional binder, the process producing a self-curing granule without the need for a drying step.

However, it has been found by the inventors that, despite their apparently high phosphate content, phosphate release levels from these granules was much lower than expected. A specific problem therefore with making granules from high phosphate-containing ashes and powders for use as fertilisers is the low availability of phosphate compared with the apparent phosphate content by weight.

Therefore, there exists a need for an improved method for granulating powders that contain potentially useful levels of phosphate to produce fertilisers with better phosphate release properties.

It is an object of the present invention to provide an alternative, and preferably improved, and economically viable process whereby powders can be treated yielding granulated products that have improved phosphate release properties for use as fertilisers.

It is a further object of the present invention that these powders can be granulated without the use of additional binders such as clays or polymers, producing a self-curing granule.

### The Invention

Accordingly, the invention provides a method of processing a powder comprising ash, the method comprising either:
(i)
   (a) combining a powder comprising ash and one or more alkaline earth metal oxides, carbonates and/or hydroxides with sulphuric or phosphoric acid or a mixture thereof; and
   (b) mixing and granulating the combination of (a) to form granules,
   wherein the combination of (a) has a pH of up to 7, and wherein the reaction between the acid and the alkaline earth metal oxide, carbonate and/or hydroxide produces self-curing granules and generates heat which at least partially dries the granules; or
(ii)
   (a) combining a powder comprising ash with sulphuric or phosphoric acid or a mixture thereof;
   (b) increasing the alkaline earth metal oxide, carbonate and/or hydroxide content of the powder by adding one or more alkaline earth metal oxides, carbonates, hydroxides or mixtures thereof; and
   (c) mixing and granulating the combination of (b) to form granules,
wherein the combination of (b) has a pH of up to 7, and wherein the reaction between the acid and the alkaline earth metal oxide, carbonate and/or hydroxide produces self-curing granules and generates heat which at least partially dries the granules.

The resultant granules are useful as fertilisers and are found to show good phosphate availability.

Many powders, because of their small size, irregular shape or surface characteristics, are cohesive and do not flow well. Other powders because of their low sedimentation viscosity are difficult to handle and cannot be processed by automatic equipment but only carefully and slowly by hand. Granules produced from a cohesive system of the invention, however, can be larger, denser and more isodiametric, all factors contributing to improved flow properties.

The resultant granules are useful in that they can be handled by conventional granule handling equipment or used in machines that process granular material. The powdered ashes, by contrast, are difficult and in some cases practically impossible to handle in this way. The granules formed by the methods of the invention can be spread by conventional agricultural fertiliser spreading machinery or by hand if as part of domestic fertiliser products.

The ashes are typically phosphate-containing ashes and hence the powders to be processed also contains phosphate. Suitable phosphate-containing powders for use in the invention are described in more detail below.

Preferred methods use powders including ash from incinerators or kilns, or from other industrial sources as starting material, and in methods of the invention the powder is generally substantially only ash, and may be referred to as powdered ash. In preferred methods 80% or more by weight of the starting material powder consists of the ash, optionally supplemented by other beneficial additives described in more detail below but e.g. including inorganic nutrients and/or alkaline earth metal carbonates, oxides or hydroxides. More preferably 85% or more, 90% or more or 95% or more by weight, or substantially the whole weight of the starting material powder is ash. Ashes from different sources can be mixed.

The method of processing the powder may comprise pre-treating the powder with water and mixing, prior to the methods described above.

The pre-treating may be carried out with sufficient water to wet or dampen the powder rather than so much that the mixture forms a slurry.

Alternatively, the acid may be added to dry powder. This may be advantageous when the starting material contains contaminants that can be removed via the addition of concentrated acid (for example, dioxins). Further water can then be added during granulation of the combination, if required.

In the combining step of (i)(a) or (ii)(a), reaction of the acid with the powder typically generates heat and results (in the presence of water) in formation of compounds that may include hydrates and hemi-hydrates that remove moisture from the mix. During this combining the mixture hence cures, this curing suitably being allowed to continue for sufficient time for the mixture to set into self-curing granules. The term "self-curing granule" as used herein means a granule that cures and dries to form a hard, chemically set granule without the need for additional binders (excluding the acid and alkaline earth metal compounds). As discussed further herein, the self-curing granule typically cures without the need for external heat (i.e. heat not arising from the neutralisation reaction between the acid and alkaline earth metal compounds) to remove excess moisture from the granules in order for them to harden.

The heat may assist in removing excess moisture, and drying is therefore an optional step and is often not required at all. The invention therefore also provides a more efficient (both in terms of time and energy costs) method of producing acidic (i.e. pH less than 7) granules from ashes.

It is hypothesised that the acid reacts with the alkaline earth metal compounds (either present in the ash or added to the powder) to form an insoluble alkaline earth metal salt matrix which causes the granules to set. The invention therefore provides granules with beneficial properties over other granules (such as agglomerated granules) such as increased strength and water-resistance.

By contrast to cured granules, agglomerated products typically have a lower crushing strength. Therefore, agglomerated products are less stable during storage, transportation and distribution. In particular, in the presence of moisture, the agglomerated products rehydrate such that they either lose their strength and revert to a suspension and/or agglomerate together further to produce large clusters. This clearly limits their use in agriculture.

The resultant granules are typically acidic and have a pH of 7 or less than 7, preferably less than 6, preferably less than 5 - when measured by breaking up a granule in water of neutral pH. The aqueous mixture of powder and acid prior to granulation preferably has pH 3 to 6, preferably pH 4 to 6, or 4 to 5, and preferably the granules when made and then measured subsequently produce a solution of pH between 3 and 6, more preferably pH between 4 and 6. The pH values stated are the pH values when measured in a 10% solution or suspension (by weight). It is thought that the acidic nature of the granules imparts greater phosphate release properties on the granules as at pH levels between 2.2 and 7.2, especially within the preferred pH ranges indicated above, the phosphorous can exist to greater extents in the form of the dihydrogen phosphate (H₂PO₄⁻) anion, which shows good aqueous solubility.

The methods optionally comprise combining the moist granules with further powder, which is the same as or different to the powder of step (i)(a) or (ii)(a), to prevent sticking and form free-flowing granules. This can also aid when curing of the granules is incomplete and/or the granules are sticking.

As discussed above, one aim of the invention is to take hard to process powders comprising ashes, and convert them to a useful format. The powders are generally of very small size. Typically, these have an MMD of up to 1mm, and very often below this, e.g. an MMD of up to 0.5mm or up to 0.3mm. The powders are often the result of combustion of particular wastes and can contain traces of non-fully combusted (also referred to as not fully ashed) elements, e.g. bone meal ash can contain identifiable pieces of teeth. These may or may not be fragile. The recited mean particle sizes for the powders exclude these incidental traces of the original waste.

Powders of this type are also characterised by their low density, also measurable as a relatively low sedimentation velocity in air. For examples, these powders can have a sedimentation velocity of 3ms⁻¹ or less, or of 2ms⁻¹ or less.

The particle size of the granules produced by the method of the invention can vary according to the particular end use and can be fractionated, in particular with intended use. The methods may especially comprise forming granules of mass median diameter (MMD) 1 to 10mm. Particles in this range are generally easy to handle. In preferred embodiments, the method comprises forming granules of 2mm or more MMD, preferably up to 5mm, and in particular in the range from 2 to 5mm. Preferably, the method comprises forming granules having a mass median diameter of 2mm to 3.5mm. Such sizes are found to work well in known fertiliser and other agricultural spreading machines. Larger particles of fertiliser are not favoured by farmers, as these can generate local zones of high concentration nutrients in the field. Particle size for the granules is suitably measured using a sieve or mesh-based method, e.g. using sieves and related calibration equipment from Endecotts Ltd of London. Particle sizes for other uses, e.g. in domestic fertilisers, may be towards the smaller ends of these ranges.

A range of phosphate-containing powders are suitable for use in the invention, including powders such as those produced from phosphate mining, other phosphate-containing powders from industrial processes, powders from the calcination of bone and offal to produce bone meal ash, incinerated sewage sludge ash, ashes from the combustion of poultry litter, ashes from the combustion of other biomasses. The ashes may be flue ash or bottom ash.

A range of powdered ashes can especially be used in the methods, and thus the powder may comprise ash from combustion of one or more of bone meal and/or meat (specifically meat and bone meal ash (MBMA)), biomass, animal litter, poultry litter (specifically poultry litter ash (PLA)), sewage sludge (specifically incinerated sewage sludge ash (ISSA)), offal and crematorium residue, and may include mixtures of one or more or all of these.

Preferred powders comprise MBMA and ISSA, due to their relatively high phosphorous content, being again useful in a fertiliser product. Still further preferred powders comprise PLA, which contains a useful mixture of both phosphorous and also potassium. Other preferred powders comprise combinations of these.

The method of the invention may further comprise the addition of one or more alkaline earth metal oxides, hydroxides or carbonates or mixtures thereof. The addition of the alkaline earth metal oxides, hydroxides or carbonates or mixtures thereof is typically after the acid is added to the ash or a mixture of ash and water, but before the mixture is processed to form granules. The alkaline earth metal compounds may be added to provide a desired final pH of the granulated product. Alternatively, or additionally, alkaline earth metal compounds can be added to increase the heat produced during the combination of the ash, water and acid and/or to aid in the curing of the granules e.g. by enhancing and forming the granule mineral matrix.

In some cases, depending on its source, the starting material powder may already comprise one or more alkaline earth metal compounds and therefore these do not need to be added during the method of the invention. This may particularly be the case when the powder is or comprises ash where alkaline earth metal compounds have been added for abatement during incineration or where the ashes themselves are a source of alkaline earth metal compounds (e.g. calcium compounds from bones and teeth in meat and bone meal ash). The methods of the invention therefore optionally comprise the step of increasing the alkaline earth metal oxide, carbonate and/or hydroxide content of the powder by adding one or more alkaline earth metal oxides, carbonates, hydroxides or mixtures thereof. The method may comprise increasing the alkaline earth metal oxide, carbonate and/or hydroxide content of the powder to at least 5% w/w, preferably at least 10% w/w or more preferably at least 15% w/w in relation to the total weight of the powder.

Suitable such alkaline earth materials include: burnt lime (mainly calcium oxide), calcium oxide, magnesium oxide, burnt dolomitic lime (magnesium and calcium oxides), limestone (mainly calcium carbonate), dolomitic limestone (magnesium and calcium carbonates), calcium carbonate, magnesium carbonate, calcium hydroxide, magnesium hydroxide and other minerals containing calcium and or magnesium oxides, carbonates or hydroxides.

The methods may comprise mixing the powder with, or utilising a powder that contains, an oxide or hydroxide of calcium or magnesium, or mixtures thereof. In particularly preferred examples, the methods comprise combining the powder with, or providing a powder containing calcium (II) oxide (CaO). CaO is readily available and adds calcium to the nutritional content. The addition of dolomitic type minerals increases the magnesium content of the resultant granules, although there is an additional cost then associated with the end fertiliser.

In other embodiments, the invention provides a method which does not involve the addition of alkaline earth metal oxides, hydroxides and carbonates or other alkaline materials, including ammonia or ammonium salts or solutions.

Referring to the description above, the powders can also have other beneficial materials included with them or added as desired to yield a more beneficial product, which for example may be plant nutrient material including nitrogenous or potassium containing materials. Other examples of such materials include potassium salts (for example, potassium sulphate) or even straw ash for increasing the potassium content of the final granules and materials which increase the moisture retention of the final granules (such as lignite). These are generally, but not necessarily, added to the powder before the addition of the acid. As an alternative, these materials can be added to the acid (e.g. dissolved in the acid solution) and the resulting mixture of the acid and these materials is then contacted with the powder.

In preferred embodiments of the invention the starting material is ash that is inherently suitable, in terms of nutrient value, for use as fertiliser, but may not be in a form that can be handled or spread by standard farming machinery. The starting material is preferably hence substantially free from toxic components known to be unsuitable for use as agrochemical products. For example, the powders may be substantially free of high oxidation state transition metal ions (e.g. Chromium (VI) ions), halogenated cyclic compounds (e.g. polychlorinated dibenzofurans and dibenzodioxins), steroids and hormones.

As described in more detail in examples below, the invention uses acidic solutions in combination with the ashes. The process generates heat, which aids in the curing of the granules. The acids used in the methods of the invention are typically high concentration acids and may be added in substantially neat form. Typically the acids have a concentration of 60% or greater, preferably 70% or greater, more preferably 80% or greater, even more preferably 90% or greater. In one embodiment, the acids are added in neat form (i.e. undiluted). The concentrations above are expressed as concentrations by weight, hence 600g sulphuric acid in 400g water is a 60% solution. The acids are suitably added to the powder, to the dampened or moistened powder or to a powder / water mix if more water is used in an initial step.

The acid used is suitably either phosphoric acid, sulphuric acid or a mixture of phosphoric and sulphuric acids. Although sulphuric acid is preferred due to its lower cost, phosphoric acid can be used in ashes with a lower phosphate content (e.g. poultry litter ash) to increase the phosphate content of the granulated product. Accordingly, in one preferred embodiment, the acid is or comprises sulphuric acid. In another preferred embodiment, the acid is a mixture of sulphuric acid and phosphoric acid. The acid may be a mixture of sulphuric acid and phosphoric acid wherein the mixture comprises 1% to 60% w/w of phosphoric acid, for example 5% to 50% w/w of phosphoric acid, preferably 10% to 40% of phosphoric acid, with the remaining amount of acid being sulphuric acid. The acid is typically a mixture of sulphuric acid and phosphoric acid where the mixture comprises at least 3 times, preferably at least 4 times, even more preferably at least 5 times as much sulphuric acid as phosphoric acid.

The ratio of components contributes to the nutrient value in an end fertiliser product and affects the process conditions, e.g. temperature generated (which aids granule curing).

The amount of water required will depend on the moisture content of the ash used in the process. Typically, the method comprises contacting the ash with water at a weight ratio of 1:1 to 7:1 ash : water. Preferably, the method comprising contacting the ash with water at a weight ratio of 2:1 to 5:1 ash : water.

The methods suitably comprise combining the ash or ash/water mix with the acid at a weight ratio of from 1:1 to 15:1 ash: acid, more preferably combining the ash with the acid at a weight ratio of from 2:1 to 12:1 ash: acid. When the ash is meat and bone meal ash, the method typically comprises combining the meat and bone meal ash with the acid at a weight ratio of 2:1 to 4:1. When the ash is poultry litter ash, the method typically comprises combining the poultry litter ash with the acid at a weight ratio of 7:1 to 12:1. When the ash is treated with water before being treated with acid, in the above ratios, the weight of the ash is the weight of ash in the ash and water mix and not the total weight of the ash and water in the mix.

Granulation of the product is carried out with standard equipment. Preferably, in carrying out the methods, the wet combination of powder plus acid (plus other optional and preferred components) is granulated in one step. During granulation the curing product may be wetted, e.g. using a mist of water. Thus, there is preferably no intermediate cured and dry product which is separately and subsequently granulated.

The process is typically conducted in a single apparatus that both mixes and then granulates as a seamless process. The properties of the granules can be varied by adjusting the speed and direction of the bowl and rotor. An example of an apparatus for use in carrying out the method of the invention is a high intensity mixer granulator.

The invention provides a convenient and efficient way to render phosphorous / phosphate-containing powders capable of being processed, especially into fertilisers, giving a product with high availability of phosphate. The end product can be used directly as fertiliser, though optionally with other nutrients added. It is preferred to carry out the method with powdered ash that is relatively non-toxic, so that no special detoxifying steps are needed - these would add complication and expense. The methods preferably avoid organic waste stuffs such as agricultural slurries for the same reasons.

A particular method of the invention for processing ash comprising or consisting of MBMA, PLA, ISSA or mixtures thereof, comprises
(a) mixing the ash with water in a weight ratio of 7-1 parts ash : 1 part water;
(b) contacting the ash and water with sulphuric or phosphoric acid or a mixture thereof at a weight ratio of 12-2 parts ash : 1 part acid; and
(c) mixing and granulating the combination of (b) to form granules,
wherein the combination of (b) has a pH of up to 7, preferably pH of 3 to 6, and wherein the reaction between the acid and the alkaline earth metal oxide, carbonate and/or hydroxide produces self-curing granules and generates heat which at least partially dries the granules.
wherein the mixing and the granulating steps of (b) and (c) are carried out in a single apparatus that mixes and granulates in a single process.

A further particular method of the invention for processing ash comprising or consisting of MBMA, PLA, ISSA or mixtures thereof, comprises
(a) mixing the ash with water in a weight ratio of 7-1 parts ash : 1 part water;
(b) contacting the ash and, if present, the water with sulphuric or phosphoric acid or a mixture thereof at a weight ratio of 12-2 parts ash : 1 part acid; and
(c) increasing the alkaline earth metal oxide, carbonate and/or hydroxide content of the powder by adding one or more alkaline earth metal oxides, carbonates, hydroxides or mixtures thereof; and
(d) mixing and granulating the combination of (b) to form granules,
wherein the combination of (c) has a pH of up to 7, preferably pH of 3 to 6, and wherein the reaction between the acid and the alkaline earth metal oxide, carbonate and/or hydroxide produces self-curing granules and generates heat which at least partially dries the granules.
wherein the mixing and the granulating steps of (b), (c) and (d) are carried out in a single apparatus that mixes and granulates in a single process.

The invention also provides a method of making a fertiliser, comprising a method of the invention as described. Making a fertiliser may comprise supplementing the powder with a nutrient desired in the fertiliser. It may comprise supplementing the acid solution with a nutrient desired in the fertiliser, for example by dissolving the nutrient in the acid.

The invention is now illustrated in specific examples.

### Examples

### Example 1A - Meat and Bone Meal Ash

To 325g of meat and bone meal ash (MBMA) was added 95g of water and then the mass was mixed vigorously to a homogeneous paste. To this paste was then added a mixture of 50g of 98% sulphuric acid and 60g of 65% phosphoric acid with the mixture being continuously stirred until a damp paste resulted. This paste was then granulated to yield a hard self-curing granules.

Phosphate release was determined by the Molybdenum Blue Method described in W.I.M. Holman, "A New Technique for the Determination of Phosphorus by the Molybdenum Blue Method", J. Biochem (1943), 37 pp. 256-259. Relative levels of phosphorus can be determined by colorimetry.

The pH of the granules was also measured in a 10% solution/suspension in water.

Table 1 shows the absorption levels at a wavelength of 625nm (indicative of phosphate levels) and the pH of ungranulated MBMA powder and granules of MBMA made by the methods of the invention, compared to a control sample.

**Table 1**

| **Sample** | **Absorption at wavelength of 625nm** | **pH (measured in a 10% solution/suspension)** |
|---|---|---|
| Blank (Control) | 0.159 | |
| MBMA Powder | 0.327 | 11 |
| MBMA Granules | 1.788 | 6 |

### Example 1B - Meat and Bone Meal Ash

To 294g of meat and bone meal ash (MBMA) was added a mixture of 45g of 65% phosphoric acid and 56g of 98% sulphuric acid with vigorous mixing. This resulted in a hot, moist powder to which 102g of water was added. The severity of the mixing was then immediately reduced in order to facilitate granulation, yielding hard, self-curing granules. The granules were found to have a pH of 5.8 when measured in a 10% solution/suspension in water.

### Example 2A - Poultry Litter Ash

400g of poultry litter ash (PLA) was first directly treated with 50g of 98% sulphuric acid and at first vigorously mixed, following this first mixing process then 100g of water was added and the vigorous mixing continued until a damp paste resulted, whereupon this paste was then granulated using conventional granulating technology. The resultant granule albeit damp and soft continued to cure and dry to yield a hard granule, from the remaining heat of the exothermic reaction earlier.

Phosphate release was determined by the Molybdenum Blue Method described in W.I.M. Holman, "A New Technique for the Determination of Phosphorus by the Molybdenum Blue Method", J. Biochem (1943), 37 pp. 256-259. Relative levels of phosphorus can be determined by colorimetry.

The pH of the granules was also measured in a 10% solution or suspension in water.

Table 2 shows the absorption levels at a wavelength of 625nm (indicative of phosphate levels) and the pH of ungranulated PLA powder and granules of PLA made by the methods of the invention, compared to a control sample.

**Table 2**

| **Sample** | **Absorption at wavelength of 625nm** | **pH (measured in a 10% solution/suspension)** |
|---|---|---|
| Blank (Control) | 0.159 | |
| PLA Powder | 0.502 | 8 |
| PLA Granules | 1.093 | 6.5 |

### Example 2B - Poultry Litter Ash

320g of poultry litter ash (PLA) was first directly treated with 24g of 98% sulphuric acid and 48g of 65% phosphoric acid whilst being vigorously mixed. Following this first mixing process, 8g of CaO was added whilst the vigorous mixing continued. 88g of water was then added and the intensity of mixing was reduced to encourage granulation to form hard, self-curing granules. The pH of the granules was found to have a pH of 6 when measured in a 10% solution/suspension in water.

### Example 3 - Meat and Bone Meal Ash (large scale)

To a high intensity mixer granulator was added meat and bone meal ash (29.2 kg) and potassium sulphate (0.6kg). A mixture of 98% sulphuric acid (5.6kg) and 65% phosphoric acid (4.5kg) was added to the ash and potassium sulphate. The mixture was then mixed for 2:06 minutes with a rotor speed of 500 rpm and a bowl speed of 40 rpm.

Water was then added as a fine spray at a rate of 4L per minute for a period of 2:18 mins and the mixer was then set to granulate with a rotor speed of -500rpm and a bowl speed of 20 rpm. A negative rotor speed refers to the direction of rotation (i.e. rotation in the opposite direction to the bowl).

Granulation was stopped at total elapsed time of 6:28 min from start of process.

Yield:
Fines with a diameter of <3mm: 16.47 kg
Granules with a diameter of 3-5mm: 14.07 kg
Granules with a diameter of >5mm: 10.41 kg

The resultant granules had an NPK rating of 0:21:4. The first number represents the percentage of nitrogen in the product; the second number the percentage of P₂O₅ and the third represents the percentage of K₂O. Although the fertilisers do not contain P₂O₅ or K₂O, by convention, the equivalent amounts of P₂O₅ and K₂O are used rather than the percentage weight of elemental phosphorus or potassium. The granules were found to have a pH of 5.4 when measured in a 10% solution/suspension in water.

### Example 4 - Poultry Litter Ash (large scale)

To a high intensity mixer granulator was added poultry litter ash (32 kg). A mixture of 98% sulphuric acid (4.6kg) and 65% phosphoric acid (2.4 kg) was added to the ash. The mixture was then mixed for 3 minutes with a rotor speed of 500 rpm and a bowl speed of 40 rpm. Lime (0.8kg) was then added and mixing continued for a further 1:18 mins.

The mixer was then set to granulate with a rotor speed of -250rpm and a bowl speed of 49 rpm and water was added as a fine spray at a rate of 4L per minute for a period of 1:45 mins. A negative rotor speed refers to the direction of rotation (i.e. rotation in the opposite direction to the bowl).

Granulation was then continued for a further 6:26 minutes.

Yield:
Fines with a diameter of <3mm: 16.8 kg
Granules with a diameter of 3-5mm: 19.25 kg
Granules with a diameter of >5mm: 8.67 kg

The resultant granules had an NPK rating of 0:16:12. The first number represents the percentage of nitrogen in the product; the second number the percentage of P₂O₅ and the third represents the percentage of K₂O. Although the fertilisers do not contain P₂O₅ or K₂O, by convention, the equivalent amounts of P₂O₅ and K₂O are used rather than the percentage weight of elemental phosphorus or potassium. The granules were found to have a pH of 5.7 when measured in a 10% solution/suspension in water.

Optionally small amounts of alkaline earth oxides, hydroxides or carbonates, or other materials such as process fines from this reaction can be added as a dusting medium to reduce adhesion and assist in handling of the 'green' granules. However, the addition of too much alkaline earth oxides, hydroxides or carbonates, will reduce the phosphate availability.

Accordingly, the invention provides methods of making granules from ashes with high phosphate availability when used as fertilisers.

## Claims

1. A method of processing a powder comprising ash, the method comprising either:
(i)
(a) combining a powder comprising ash and one or more alkaline earth metal oxides, carbonates and/or hydroxides with sulphuric or phosphoric acid or a mixture thereof; and
(b) mixing and granulating the combination of (a) to form granules,
wherein the combination of (a) has a pH of up to 7, and wherein the reaction between the acid and the alkaline earth metal oxide, carbonate and/or hydroxide produces self-curing granules and generates heat which at least partially dries the granules; or
(ii)
(a) combining a powder comprising ash with sulphuric or phosphoric acid or a mixture thereof;
(b) increasing the alkaline earth metal oxide, carbonate and/or hydroxide content of the powder by adding one or more alkaline earth metal oxides, carbonates, hydroxides or mixtures thereof; and
(c) mixing and granulating the combination of (b) to form granules,
wherein the combination of (b) has a pH of up to 7, and wherein the reaction between the acid and the alkaline earth metal oxide, carbonate and/or hydroxide produces self-curing granules and generates heat which at least partially dries the granules.

2. A method according to claim 1, wherein the combination of in (i)(a) or the combination of (ii)(b) has a pH in the range of 3 to 6.

3. A method according to claim 1 or 2, wherein a 10% solution or solution by weight of the granules in water has pH of up to 7.

4. A method according to claim 3, wherein a 10% solution by weight of the granules in water has pH in the range of 4 to 6.

5. A method according to any previous claim, comprising, prior to step (i)(a) or (ii)(a), contacting the powder comprising ash with water and mixing.

6. A method according to any previous claim comprising increasing the alkaline earth metal oxide, carbonate and/or hydroxide content of the powder to at least 5% w/w of the weight of the powder.

7. A method according to any previous claim, comprising forming granules of mass median diameter (MMD) from 2 to 10mm.

8. A method according to any previous claim, wherein the powdered ash comprises meat and bone meal ash, incinerated sewage sludge ash, poultry litter ash or mixtures thereof.

9. A method according to any previous claim, wherein 80% or more by weight of the powder consists of ash.

10. A method according to any previous claim comprising contacting the ash and water with a 60% or greater by weight solution of the acid.

11. A method according to any previous claim wherein the method is carried out in an apparatus which is able to both mix and then subsequently granulate the mixture in a single process.

12. A method according to any previous claim comprising combining the ash with water at a weight ratio of from 1:1 to 7:1 ash : water.

13. A method according to any previous claim comprising combining the ash with the acid at a weight ratio of from 2:1 to 12:1 ash : acid.

14. A method for processing ash comprising at least 85% by weight of, or consisting of, (i) meat and bone meal ash, (ii) poultry litter ash, (iii) incinerated sewage sludge ash or (iv) mixtures of one or more thereof, wherein the method comprises either:
(i)
(ai) optionally mixing ash comprising one or more alkaline earth metal oxides, carbonates and/or hydroxides with water in a weight ratio of 7-1 parts ash : 1 part water;
(a) combining the ash and, if present, water with 70% or greater sulphuric acid or phosphoric acid or a mixture thereof at a weight ratio of 12-2 parts ash : 1 part acid; and
(b) mixing and granulating the combination of (a) to form granules,
wherein the combination of (a) has a pH of up to 6, and wherein the reaction between the acid and the alkaline earth metal oxide, carbonate and/or hydroxide produces self-curing granules and generates heat which at least partially dries the granules; or
(ii)
(ai) optionally mixing the ash with water in a weight ratio of 7-1 parts ash : 1 part water;
(a) combining the ash and, if present, water with 70% or greater sulphuric acid or phosphoric acid or a mixture thereof at a weight ratio of 12-2 parts ash : 1 part acid;
(b) increasing the alkaline earth metal oxide, carbonate and/or hydroxide content of the powder by adding one or more alkaline earth metal oxides, carbonates, hydroxides or mixtures thereof; and
(c) mixing and granulating the combination of (b) to form granules,
wherein the combination of (b) has a pH of up to 6, and wherein the reaction between the acid and the alkaline earth metal oxide, carbonate and/or hydroxide produces self-curing granules and generates heat which at least partially dries the granules; and
wherein the mixing and the granulating steps of (i)(b)and(ii)(c) are carried out in a single apparatus that mixes and granulates in a single process.

15. A method of making a fertiliser, comprising incorporating granules made by a method according to any previous claim into a fertiliser.

## Patentansprüche

1. Verfahren zum Verarbeiten eines Pulvers, das Asche umfasst, wobei das Verfahren entweder umfasst:
(i)
(a) Kombinieren eines Pulvers, das Asche und ein oder mehrere Erdalkalimetalloxide, Karbonate und/oder Hydroxide umfasst, mit Schwefel- oder Phosphorsäure oder einer Mischung davon; und
(b) Mischen und Granulieren der Kombination aus (a), um Granulate zu bilden,
wobei die Kombination aus (a) einen pH von bis zu 7 aufweist, und wobei die Reaktion zwischen der Säure und dem Erdalkalimetalloxid, dem Karbonat und/oder dem Hydroxid selbsthärtende Granulate produziert und Wärme erzeugt, welche die Granulate zumindest teilweise trocknet; oder
(ii)
(a) Kombinieren eines Pulvers, das Asche umfasst, mit Schwefel- oder Phosphorsäure oder einer Mischung davon;
(b) Erhöhen des Erdalkalimetalloxid-, Karbonat- und/oder Hydroxidgehalts des Pulvers durch Hinzufügen von einem oder mehreren Erdalkalimetalloxiden, Karbonaten, Hydroxiden oder Mischungen davon; und
(c) Mischen und Granulieren der Kombination aus (b), um Granulate zu bilden,
wobei die Kombination aus (b) einen pH von bis zu 7 aufweist, und wobei die Reaktion zwischen der Säure und dem Erdalkalimetalloxid, dem Karbonat und/oder dem Hydroxid selbsthärtende Granulate produziert und Wärme erzeugt, die das Granulat zumindest teilweise trocknet.

2. Verfahren nach Anspruch 1, wobei die Kombination aus (i)(a) oder die Kombination aus (ii)(b) einen pH im Bereich von 3 bis 6 aufweist.

3. Verfahren nach Anspruch 1 oder 2, wobei eine 10 %-ige Lösung oder Lösung nach Gewicht der Granulate in Wasser einen pH von bis zu 7 aufweist.

4. Verfahren nach Anspruch 3, wobei eine 10 %-ige Lösung nach Gewicht der Granulate in Wasser einen pH im Bereich von 4 bis 6 aufweist.

5. Verfahren nach einem vorhergehenden Anspruch, umfassend, vor Schritt (i)(a) oder (ii)(a), das Kontaktieren des Pulvers, das Asche umfasst, mit Wasser und Mischen.

6. Verfahren nach einem vorhergehenden Anspruch, umfassend das Erhöhen des Erdalkalimetalloxid-, Karbonat- und/oder Hydroxidgehalts des Pulvers auf zumindest 5 Gew.-% des Gewichts des Pulvers.

7. Verfahren nach einem vorhergehenden Anspruch, umfassend das Bilden von Granulaten mit einem mittleren Massendurchmesser (MMD) von 2 bis 10 mm.

8. Verfahren nach einem vorhergehenden Anspruch, wobei die pulverisierte Asche Fleisch- und Knochenmehlasche, verbrannte Klärschlammasche, Geflügelstreuasche oder Mischungen davon umfasst.

9. Verfahren nach einem vorhergehenden Anspruch, wobei 80 % nach Gewicht oder mehr des Pulvers aus Asche bestehen.

10. Verfahren nach einem vorhergehenden Anspruch, umfassend das Kontaktieren der Asche und des Wassers mit einer Lösung der Säure von 60 % nach Gewicht oder mehr.

11. Verfahren nach einem vorhergehenden Anspruch, wobei das Verfahren in einer Vorrichtung durchgeführt wird, die dazu in der Lage ist, die Mischung in einem einzigen Prozess sowohl zu mischen als auch anschließend zu granulieren.

12. Verfahren nach einem vorhergehenden Anspruch, umfassend das Kombinieren der Asche mit Wasser in einem Gewichtsverhältnis von 1:1 bis 7:1 Asche:Wasser.

13. Verfahren nach einem vorhergehenden Anspruch, umfassend das Kombinieren der Asche mit der Säure in einem Gewichtsverhältnis von 2:1 bis 12:1 Asche: Säure.

14. Verfahren zum Verarbeiten von Asche, umfassend zumindest 85 % nach Gewicht oder bestehend aus (i) Fleisch- und Knochenmehlasche, (ii) Geflügelstreuasche, (iii) verbrannte(r) Klärschlammasche oder (iv) Mischungen aus einem oder mehreren davon, wobei das Verfahren entweder umfasst:
(i)
(ai) optional Mischen von Asche, die ein oder mehrere Erdalkalimetalloxide, Karbonate und/oder Hydroxide umfasst, mit Wasser in einem Gewichtsverhältnis von 7-1 Teilen Asche: 1 Teil Wasser;
(a) Kombinieren der Asche und, falls vorhanden, von Wasser mit 70 % oder mehr Schwefelsäure oder Phosphorsäure oder einer Mischung davon in einem Gewichtsverhältnis von 12-2 Teilen Asche: 1 Teil Säure; und
(b) Mischen und Granulieren der Kombination aus (a), um Granulate zu bilden,
wobei die Kombination aus (a) einen pH von bis zu 6 aufweist, und wobei die Reaktion zwischen der Säure und dem Erdalkalimetalloxid, dem Karbonat und/oder dem Hydroxid selbsthärtende Granulate erzeugt und Wärme erzeugt, welche die Granulate zumindest teilweise trocknet; oder
(ii)
(ai) optional Mischen der Asche mit Wasser in einem Gewichtsverhältnis von 7-1 Teilen Asche: 1 Teil Wasser;
(a) Kombinieren der Asche und, falls vorhanden, von Wasser mit 70 % oder mehr Schwefelsäure oder Phosphorsäure oder einer Mischung davon in einem Gewichtsverhältnis von 12-2 Teilen Asche: 1 Teil Säure;
(b) Erhöhen des Erdalkalimetalloxid-, Karbonat- und/oder Hydroxidgehalts des Pulvers durch Hinzufügen von einem oder mehreren Erdalkalimetalloxiden, Karbonaten, Hydroxiden oder Mischungen davon; und
(c) Mischen und Granulieren der Kombination aus (b), um Granulate zu bilden,
wobei die Kombination aus (b) einen pH von bis zu 6 aufweist, und wobei die Reaktion zwischen der Säure und dem Erdalkalimetalloxid, dem Karbonat und/oder dem Hydroxid selbsthärtende Granulate produziert und Wärme erzeugt, die das Granulat zumindest teilweise trocknet; und
wobei die Schritte des Mischens und Granulierens aus (i)(b) und (ii)(c) in einer einzigen Vorrichtung durchgeführt werden, die in einem einzigen Prozess mischt und granuliert.

15. Verfahren zum Herstellen eines Düngemittels, umfassend das Einarbeiten von Granulaten, die durch ein Verfahren nach einem vorhergehenden Anspruch hergestellt wurden, in ein Düngemittel.

## Revendications

1. Procédé de traitement d'une poudre comprenant de la cendre, le procédé comprenant soit :
(i)
(a) la combinaison d'une poudre comprenant de la cendre et un ou plusieurs oxydes, carbonates et/ou hydroxydes de métal alcalino-terreux, avec de l'acide sulfurique ou phosphorique ou un mélange de ceux-ci ; et
(b) le mélange et la granulation de la combinaison de (a) pour former des granules, dans lequel la combinaison de (a) a un pH allant jusqu'à 7, et dans lequel la réaction entre l'acide et l'oxyde, le carbonate et/ou l'hydroxyde de métal alcalino-terreux, produit des granules autodurcissants et génère de la chaleur qui sèche au moins partiellement les granules ; ou
(ii)
(a) la combinaison d'une poudre comprenant de la cendre avec un acide sulfurique ou phosphorique ou un mélange de ceux-ci ;
(b) l'augmentation de la teneur en oxyde, en carbonate et/ou en hydroxyde de métal alcalino-terreux, de la poudre en ajoutant un ou plusieurs oxydes, carbonates, hydroxydes de métal alcalino-terreux, ou mélanges de ceux-ci ; et
(c) le mélange et la granulation de la combinaison de (b) pour former des granules, dans lequel la combinaison de (b) a un pH allant jusqu'à 7, et dans lequel la réaction entre l'acide et l'oxyde, le carbonate et/ou l'hydroxyde de métal alcalino-terreux, produit des granules autodurcissants et génère de la chaleur qui sèche au moins partiellement les granules.

2. Procédé selon la revendication 1, dans lequel la combinaison de (i)(a) ou la combinaison de (ii)(b) a un pH compris dans la plage de 3 à 6.

3. Procédé selon la revendication 1 ou 2, dans lequel une solution à 10 % ou une solution en poids des granules dans de l'eau a un pH allant jusqu'à 7.

4. Procédé selon la revendication 3, dans lequel une solution à 10 % en poids des granules dans de l'eau a un pH compris dans la plage de 4 à 6.

5. Procédé selon l'une quelconque des revendications précédentes, comprenant, avant l'étape (i)(a) ou (ii)(a), la mise en contact de la poudre comprenant de la cendre avec de l'eau et le mélange.

6. Procédé selon l'une quelconque des revendications précédentes comprenant l'augmentation de la teneur en oxyde, en carbonate et/ou en hydroxyde de métal alcalino-terreux de la poudre jusqu'à au moins 5 % p/p du poids de la poudre.

7. Procédé selon l'une quelconque des revendications précédentes, comprenant la formation de granules de diamètre médian massique (DMM) de 2 à 10 mm.

8. Procédé selon l'une quelconque des revendications précédentes, dans lequel la cendre en poudre comprend de la cendre de farine carnée et osseuse, de la cendre de boues d'épuration incinérées, de la cendre de litière de volailles ou des mélanges de celles-ci.

9. Procédé selon l'une quelconque des revendications précédentes, dans lequel 80 % ou plus en poids de la poudre sont constitués de cendre.

10. Procédé selon l'une quelconque des revendications précédentes comprenant l'entrée en contact de la cendre et d'eau avec une solution à 60 % ou plus en poids de l'acide.

11. Procédé selon l'une quelconque des revendications précédentes dans lequel le procédé est réalisé dans un appareil qui est capable à la fois de mélanger et puis de granuler par la suite le mélange dans un processus unique.

12. Procédé selon l'une quelconque des revendications précédentes comprenant la combinaison de la cendre avec de l'eau selon un rapport pondéral allant de 1/1 à 7/1 de cendre/eau.

13. Procédé selon l'une quelconque des revendications précédentes comprenant la combinaison de la cendre avec l'acide selon un rapport pondéral allant de 2/1 à 12/1 de cendre/acide.

14. Procédé destiné à transformer de la cendre comprenant au moins 85 % en poids de, ou étant constituée de, (i) cendre de farine carnée et osseuse, (ii) cendre de litière de volailles, (iii) cendre de boues d'épuration incinérées ou (iv) mélanges de l'une ou de plusieurs de celles-ci, dans lequel le procédé comprend soit :
(i)
(ai) facultativement le mélange de cendre comprenant un ou plusieurs oxydes, carbonates et/ou hydroxydes de métal alcalino-terreux, avec de l'eau dans un rapport pondéral de 7 à 1 parties de cendre /1 partie d'eau ;
(a) la combinaison de la cendre et, si présente, de l'eau avec 70 % ou plus d'acide sulfurique ou d'acide phosphorique ou un mélange de ceux-ci selon un rapport pondéral de 12 à 2 parties de cendre /1 partie d'acide ; et
(b) le mélange et la granulation de la combinaison de (a) pour former des granules, dans lequel la combinaison de (a) a un pH allant jusqu'à 6, et dans lequel la réaction entre l'acide et l'oxyde, le carbonate et/ou l'hydroxyde de métal alcalino-terreux, produit des granules autodurcissants et génère de la chaleur qui sèche au moins partiellement les granules ; ou
(ii)
(ai) facultativement le mélange de la cendre avec de l'eau dans un rapport pondéral de 7 à 1 parties de cendre /1 partie d'eau ;
(a) la combinaison de la cendre et, si présente, de l'eau avec 70 % ou plus d'acide sulfurique ou d'acide phosphorique ou un mélange de ceux-ci selon un rapport pondéral de 12 à 2 parties de cendre /1 partie d'acide ;
(b) l'augmentation de la teneur en oxyde, en carbonate et/ou en hydroxyde de métal alcalino-terreux, de la poudre en ajoutant un ou plusieurs oxydes, carbonates, hydroxydes de métal alcalino-terreux, ou mélanges de ceux-ci ; et
(c) le mélange et la granulation de la combinaison de (b) pour former des granules, dans lequel la combinaison de (b) a un pH allant jusqu'à 6, et dans lequel la réaction entre l'acide et l'oxyde, le carbonate et/ou l'hydroxyde de métal alcalino-terreux, produit des granules autodurcissants et génère de la chaleur qui sèche au moins partiellement les granules ; et
dans lequel les étapes de mélange et de granulation de (i)(b) et (ii)(c) sont réalisées dans un appareil unique qui mélange et granule dans un processus unique.

15. Procédé de fabrication d'un fertilisant, comprenant l'incorporation de granules fabriqués par le procédé selon l'une quelconque des revendications précédentes dans un fertilisant.
